# EUROPÄISCHE PATENTSCHRIFT

(11) **EP 0 471 715 B1**
(45) Veröffentlichungstag und Bekanntmachung des Hinweises auf die Patenterteilung: **24.04.1996**
(21) Anmeldenummer: 90907004.7
(22) Anmeldetag: 07.05.1990
(51) Int. Cl.: C22B 3/00

(54) **VERFAHREN ZUR ZWEIPHASEN-EXTRAKTION VON METALLIONEN AUS FESTE METALLOXIDE ENTHALTENDEN PHASEN**
PROCESS FOR TWO-PHASE EXTRACTION OF METALLIC IONS FROM PHASES CONTAINING SOLID METALLIC OXIDES
PROCEDE POUR L'EXTRACTION EN DEUX PHASES D'IONS METAL CONTENUS DANS DES PHASES RENFERMANT DES OXYDES METALLIQUES SOLIDES

(30) Priorität: 12.05.1989 DE 3915586
(43) Veröffentlichungstag der Anmeldung: 26.02.1992
(73) Patentinhaber: Henkel Kommanditgesellschaft auf Aktien, D-40191 Düsseldorf (DE)
(72) Erfinder: SCHWAB, Werner, W-4018 Langenfeld (DE); KEHL, Ralf, W-4000 Düsseldorf 31 (DE)
(86) Internationale Anmeldenummer: EP9000734
(87) Internationale Veröffentlichungsnummer: WO9013675

(56) Entgegenhaltungen:
- EP-A- 0 043 919
- EP-A- 0 283 740
- FR-A- 2 273 583
- CHEMICAL ABSTRACTS, Band 99, Nr. 12, 1983 (Columbus, Ohio, US) Y. SAKAI et al.:"Direct Extraction of Metal Ions from Metal Oxide with Liquid CationExchanger", *see Abstract 94231v & Technol. Rep. Kansai Univ. 24, 137-47*

## Beschreibung

Die vorliegende Erfindung betrifft ein Verfahren zur Zweiphasen-Extraktion von Metallionen aus feste Metalloxide enthaltenden Phasen mit einer in einem organischen Lösungsmittel gelösten Hydroxamsäure.

Verfahren zur selektiven Extraktion von Metallionen aus wäßrigen Lösungen mit Hilfe einer in einem organischen Lösungsmittel gelösten Hydroxamsäure sind aus dem Stand der Technik bekannt.

Gemäß der DE-PS 22 10 106 werden mit einer Hydroxamsäure der allgemeinen Formel (A) 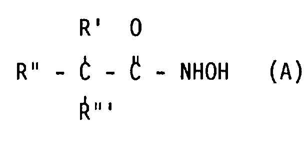 in der die Reste R für Alkylreste stehen und in der die Gesamtzahl der C-Atome im Molekül größer als 10 ist, Übergangsmetalle aus zum Teil radioaktiven wäßrigen Lösungen von Uran-Aufarbeitungsanlagen extrahiert.

Die EP-A-43 919 schlägt ein Verfahren vor, wäßrige Suspensionen von Erzen einer Solventextraktion zuzuführen und anschließend die Metalle zu reextrahieren. Bestimmte Metalle, wie z.B. Eisen, Arsen oder Antimon sind mit diesem Verfahren jedoch nicht exrahierbar.

Gemäß der US-PS 3 464 784 wird aus wäßrigen, vierwertiges Vanadium enthaltenden Lösungen das Vanadium mit Hilfe organo-löslicher Hydroxamsäuren der allgemeinen Formel (B) extrahiert 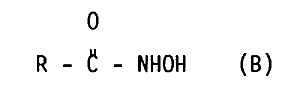 in der R für Alkyl-, Cycloalkyl- oder Arylreste mit 7 bis 44 C-Atomen, bevorzugt für sogenannte "neo-Alkylreste" stehen kann, die ein zur Carbonylgruppe benachbartes quartäres C-Atom enthalten.

In "J. Chem. Research" (S) 1982, 90 ff wird außerdem die Solvent-Extraktion von Übergangsmetallen mit sogenannten Versato-Hydroxamsäuren der vorstehenden allgemeinen Formel (B) beschrieben, in der die Reste R verzweigte, 10 bis 15 C-Atome enthaltende Alkylreste sind. Die Solvent-Extraktion verschiedener Metall-Isotope aus wäßrigen Lösungen von Aufarbeitungsanlagen radioaktiver Rückstände mit Trialkylacethydroxamsäure wird in "Reprints of the ISEC '86", 11.-16.09.1986, Munich, S. 355-362, beschrieben.

Bei den vorstehend beschriebenen Verfahren handelt es sich jedoch um Sovlent-Extraktionen bzw. Flüssig-Flüssig-Extraktionen, d.h. solchen Extraktionsprozessen, bei denen die zu extrahierenden Metallionen bereits in Lösung vorliegen.

Es ist ferner bekannt, Störelemente aus Wertmetall-Elektrolytlösungen, mittels einer Zweiphasen-Flüssig-Flüssig-Extraktion abzutrennen. Die Störelemente Arsen, Antimon, Wismut und Eisen werden beispielsweise mit den als Extraktionsmittel eingesetzten Hydroxamsäuren aus wäßrigen, mineralsauren Kupfer-Elektrolytlösungen abgetrennt. Bei diesem Stand der Technik wird die Abtrennung durch Flüssig-Flüssig-Extraktion erreicht, indem die zu entfernenden Störelemente, die in stark saurer Lösung in gelöster Form vorliegen, in die Organphase extrahiert werden.

Beispielsweise betrifft die deutsche Patentanmeldung P 37 25 611.4 ein Verfahren zur gemeinsamen Abtrennung von Arsen, Antimon, Wismut und Eisen aus Wertmetall-Elektrolytlösungen im Wege der Solvent-Extraktion und nachfolgenden Wiedergewinnung der genannten Störelemente, das dadurch gekennzeichnet ist, daß man wäßrige, mineralsaure Wertmetall-Elektrolytlösungen mit einem wenig wasserlöslichen organischen Lösungsmittel versetzt, das eine oder mehrere Hydroxamsäure(n) enthält, die beiden Phasen intensiv miteinander mischt, aus der organischen Phase durch Sulfidfällung die Störelemente Arsen, Antimon und Wismut ausfällt, die Sulfide abtrennt und das noch in der Organphase verbleibende Eisen anschließend mit einem wasserlöslichen Komplexbildner für Eisen in eine wäßrige Phase reextrahiert und zurückgewinnt.

Die deutsche Patentanmeldung P 38 36 731.9 betrifft ferner ein Verfahren zur Abtrennung von Störelementen ausgewählt aus Arsen, Antimon, Wismut und/oder Eisen aus Wertmetall-Elektrolytlösungen im Wege der Solvent-Extraktion und nachfolgender Wiedergewinnung der genannten Störelemente, in dem man eine wäßrige, mineralsaure Wertmetall-Elektrolytlösung mit einem wenig wasserlöslichen organischen Lösungsmittel, das eine oder mehrere Hydroxamsäure(n) enthält, versetzt, die beiden Phasen intensiv miteinander mischt, aus der Organophase durch Sulfidfällung Arsen, Antimon und Wismut ausfällt, die Sulfide abtrennt und das extrahierte Eisen anschließend mit einem wasserlöslichen Komplexbildner für Eisen in eine wäßrige Phase reextrahiert und zurückgewinnt, das dadurch gekennzeichnet ist, daß man vor der Sulfidfällung die organische Phase mit Wasser über eine ausreichende Kontaktierungszeit reextrahiert, das in die Wasserphase reextrahierte Arsen und/oder Antimon gegebenenfalls in an sich bekannter Weise reduktiv ausfällt und aufarbeitet.

In Abhängigkeit von Art und Zusammensetzung solcher Wertmetall-Elektrolytlösungen können Störelemente, die vor ihrer Aufarbeitung meist als Metalloxide vorhanden sind, jedoch auch ungelöst in fester Form, also suspendiert in der mineralsauren Lösung, vorliegen. Insbesondere Lösungen aus Raffinationselektrolysen, vor allem solche aus der Kupfer-Raffinationselektrolyse, können Störelemente in Form fein verteilter Feststoffe enthalten. Für die Durchführung einer Solvent-Extraktion nach dem Stand der Technik sind jedoch klare Elektrolytlösungen ohne einen Gehalt an suspendierten Feststoffen erforderlich. Bislang wurden daher derartige Feststoffe beispielsweise durch Filtration aus den Elektrolytlösungen entfernt.

Vielfach treten die Elemente Arsen, Antimon und Wismut in Form ihrer Metalloxide auch in Nebenströmen unterschiedlicher Prozesse auf, beispielsweise bei der Verhüttung der Basismetalle Kupfer, Blei oder Eisen. Solche Nebenströme können sein: Flugstäube, Schlacken, Metallschlämme, SO₂-Röstgase, die einer Naßreinigung unterzogen werden, oder bestimmte Waschwässer, die letztlich in nachfolgenden Abwasserreinigungsstufen behandelt werden. Eine Abtrennung erfolgt meist über die entsprechenden 0xide. Für die Endlagerung in Sondermülldeponien ist die Überführung in schwerlösliche Verbindungen, insbesondere beim Arsen in Form der Calciumarsenate oder basischer Eisenarsenate, erforderlich. Aus ökologischen Gründen und wegen immer knapper werdendem Deponieraum - was letztlich eine zunehmende Verteuerung der Sondermülldeponierung bedingt - werden seit einigen Jahren immer mehr Hüttenprodukte beispielsweise einer "Entarsenierung" unterzogen.

Zukünftig werden immer mehr Roherze mit höheren Gehalten an Störelementen, vor allem Arsen, verarbeitet werden. Hierdurch werden bei der schmelzmetallurgischen Aufarbeitung die zu entfernenden Mengen von As₂O₃ aus den SO₂-Röstgasen stark ansteigen (Literatur: The Aqueous Chemistry of Arsenic in Relation to Hydrometallurgical Processes, R.G. Robins, CIM Meeting, Vancouver, August 1985, S. 1 bis 26). Die Naßreinigung von As₂O₃-haltigen SO₂-Röstgasen erfolgt mit Wasser und/oder H₂SO₄-sauren Lösungen in Waschtürmen. Arsen wird aus solchen Waschwässern beispielsweise mit Kalk ausgefällt. Da jedoch die Waschflüssigkeiten stark sauer sind und viele Verunreinigungen enthalten, ist der Chemikalienverbrauch hoch und das Produkt unsauber. Das Unschädlichmachen, die Verwertung oder Lagerung solcher arsenhaltiger Produkte ist ein technischwirtschaftliches Problem. Dies trifft auch für die Elemente Wismut und Antimon zu.

Die Problematik beschränkt sich aber nicht nur auf die Abtrennung dieser Elemente im Sinne von "Störelementen". Als Störelemente sind sie unerwünscht, weil sie die Qualität der meist durch Raffination erzeugten "reinen" Metalle erniedrigen und auch aus ökologischer Sicht bedenklich sind. Gleichzeitig sind die vorher genannten Nebenströme bei Verhüttungprozessen von Basismetallen auch wichtige Rohstoffquellen zur Gewinnung dieser Metalle, die in unterschiedlichen Bereichen Anwendung finden (Elektronik, Optik, Katalysatortechnik, Legierungsbestandteil). Als Koppelprodukte haben insbesondere die Oxide, die bei der Verhüttung von Roherzen anfallen, Bedeutung, beispielsweise: As₂O₃ aus Röstgasen nach Naßreinigung, bei der Kupfer-, Blei- und Eisen-Verhüttung. Sb₂O₃ aus Röstgasen nach Naßreinigung, besonders bedeutsam ist die Sb-Gewinnung in Blei-Hütten, ebenso bei der Gewinnung von Schwermetallen in nachfolgenden pyrometallurgischen, naß- und elektrochemischen Raffinationsprozessen. Bi₂O₃ besonders aus der Blei- und Kupfer-Verhüttung.

Es sind deshalb Verfahren gesucht, die einerseits Störelemente wie beispielsweise As, Sb und Bi abtrennen und dadurch die Umweltbelastung minimieren und die Produktqualität der erzeugten Basismetalle erhöhen, die andererseits aber auch diese Störelemente als Wertstoffe wieder in den Wirtschaftskreislauf zurückführen (Recycling). Die vorstehend aufgezeigte Problematik ist jedoch nicht ausschließlich auf die genannten Elemente As, Sb und Bi beschränkt. Vielmehr betrifft sie darüber hinaus eine Vielzahl weiterer Metalle, die bei zahlreichen Prozessen in Oxidform als Nebenbestandteile anfallen. Auch hierbei ist es dringend erwünscht, diese Metalle zu gewinnen und gleichfalls einer weiteren Verwendung zuzuführen.

Für die Rückgewinnung bzw. Gewinnung aller dieser Metalle mit Hilfe einer Solvent-Extraktion war es gemäß dem Stand der Technik bislang immer erforderlich, die vorliegenden Metalloxide zunächst in Lösung zu bringen, was den Einsatz großer Volumina an Aufschlußmitteln, vorzugsweise Mineralsäuren, bedingte. Hinzu kam, daß auch diese Aufschlußmittel wieder aufbereitet oder aber entsorgt werden mußten.

Demgegenüber ist es nun die Aufgabe der vorliegenden Erfindung, in Anbetracht des beschriebenen Standes der Technik, ein einfaches und kostengünstiges Verfahren zur Extraktion von Metallionen aus feste Metalloxide enthaltenden Phasen bereitzustellen, das die Abtrennung dieser Metallionen auf technisch unkomplizierte Art ermöglicht und bei dem die aufzuarbeitenden, feste Metalloxide enthaltenden Phasen, also natürliche Rohstoffe oder Produkte bzw. Nebenströme unterschiedlicher Prozesse, unmittelbar, also beispielsweise ohne vorheriges Auflösen, dem Verfahren zur Extraktion von Metallionen zugeführt werden können.

Es wurde überraschend gefunden, daß sich mit Hilfe von an sich bekannten Hydroxamsäuren, vorzugsweise Neoalkylhydroxamsäuren, in organischer Phase nicht nur wäßrige oder mineralsaure Lösungen, sondern sogar feste Metalloxide enthaltende Phasen, also suspendierte oder selbst pulverförmige feste Metalloxide enthaltende Phasen, in der Weise extrahieren lassen, daß die Metallionen in die Organophase überführt werden.

Die vorliegende Erfindung betrifft somit ein Verfahren zur Zweiphasen-Extraktion von Metallionen unter Verwendung von Hydroxamsäuren der allgemeinen Formel (I) 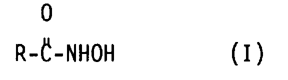 in welche R einen geradkettigen oder verzweigten, gesättigten oder ungesättigten Alkylrest mit 5 bis 21 C-Atomen, einen unsubstituierten oder mit C₁₋₆-Alkylgruppen substituierten Cycloalkylrest mit 5 bis 7 C-Atomen, oder einen unsubstituierten oder mit C₁₋₁₂-Alkylgruppen substituierten Phenylrest bedeutet, dadurch gekennzeichnet, daß man
- feste, feinzerteilte Metalloxide von Metallen der III. bis V. Hauptgruppe sowie der I., II. und IV. bis VIII. Nebengruppe des periodischen Systems, die entweder als solche in fester Phase oder dispergiert, in nicht gelöster Form in einer flüssigen Phase vorliegen,
- mit einem inerten organischen Lösungsmittel, welches mit Wasser nur geringfügig mischbar ist und mindestens eine Hydroxamsäure der allgemeinen Formel (I) in einer für die Extraktion der Metallionen hinreichenden Menge gelöst enthält, in Kontakt bringt,
- die die festen Metalloxide enthaltende Phase mit der die Hydroxamsäure(n) enthaltenden organischen Phase über eine für die Extraktion der Metallionen hinreichende Kontaktierungszeit intensiv miteinander vermischt,
- anschließend die organische Phase abtrennt und die in dieser enthaltenen Metallionen in an sich bekannter Weise reextrahiert und aufarbeitet.

Im folgenden fallen unter die Definition der mittels des erfindungsgemäßen Verfahrens zu extrahierenden Metalloxide einmal die Oxide folgender Hauptgruppenelemente: Gallium, Indium, Thallium, Germanium, Zinn, Blei, Arsen, Antimon und Wismut. Weiterhin fallen unter diese Definition die Oxide der Nebengruppenelemente Kupfer, Silber, Zink, Cadmium, Quecksilber, Titan, Zirkon, Hafnium, Vanadin, Niob, Tantal, Chrom, Molybdän, Wolfram, Mangan, Technetium, Rhenium, Cobalt, Nickel, Ruthenium, Rhodium, Palladium, Osmium, Iridium und Platin.

Diese Metalloxide können zum einen Bestandteile natürlicher Rohstoffe sein, zum anderen aber auch Erzeugnisse, Nebenprodukte oder Abfallprodukte unterschiedlicher Prozesse.

Im Sinne der vorliegenden Erfindung ist es von Bedeutung, daß diese Metalloxide in fester, d.h. nicht gelöster Form vorliegen. Diese Metalloxide können nun entweder als solche in fester Phase, d.h. ohne jedwede Zusätze, dem Extraktionsverfahren unterworfen werden. Eine zweite Variante des erfindungsgemäßen Verfahrens sieht vor, diese festen Metalloxide in einer flüssigen Phase zu dispergieren und so dem Extraktionsverfahren zu unterwerfen. Als flüssige Phase kommen hierbei Wasser, Mineralsäuren, beispielsweise Schwefelsäure, Salzsäure, Salpetersäure oder Phosphorsäure, oder aber organische Lösungsmittel in Frage. Von den genannten Mineralsäuren ist die Schwefelsäure bevorzugt. Als organische Lösungsmittel, die zum Dispergieren der festen Metalloxide Verwendung finden können, kommen diejenigen in Frage, die ohnehin im Zusammenhang mit dem Extraktionsmittel Hydroxamsäure beim Extraktionsprozeß eingesetzt werden. Nähere Angaben hierzu finden sich an anderer Stelle. Die festen Metalloxide sollten in möglichst feinzerteilter Form, d.h. vorzugsweise pulverförmig, dem Extraktionsprozeß unterworfen werden. Natürlich ist das erfindungsgemäße Extraktionsverfahren auch mit grobteiligeren festen Metalloxiden durchführbar, doch wird hierdurch die Extraktionszeit unnötig verlängert und das Extraktionsergebnis vermindert. "Feinzerteilt" im Sinne der Erfindung bedeutet mithin, daß die festen Metalloxide eine möglichst große Oberfläche bieten.

Der erste Schritt des erfindungsgemäßen Verfahrens besteht darin, die feste Metalloxide enthaltenden Phasen mit einem wenig wasserlöslichen organischen Lösungsmittel zu versetzen, das eine oder mehrere, an sich bekannte, Hydroxamsäuren der allgemeinen Formel (I) enthält, 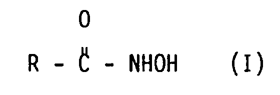 in der R einen geradkettigen oder verzweigten, gesättigten oder ungesättigten Alkylrest mit 5 bis 21 C-Atomen oder einen unsubstituierten oder mit C₁₋₆-Alkylgruppen substituierten Cycloalkylrest mit 5 bis 7 C-Atomen, oder einen unsubstituierten oder mit C₁₋₁₂-Alkylgruppen substituierten Phenylrest bedeutet.

Als inerte organische Lösungsmittel, die wenig mit Wasser mischbar oder darin löslich sind, kommen z.B. folgende Verbindungen in Frage: aliphatische, cycloaliphatische oder aromatische Kohlenwasserstoffe oder deren Mischungen mit hohem Siedepunkt, chlorierte Kohlenwasserstoffe, Ketone oder Ether mit hohem Siedepunkt oder auch Mischungen derartiger Verbindungen. Diese organischen Lösungsmittel sollen "inert" sein, d.h., sie sollen mit den als Extraktionsmittel verwendeten Hydroxamsäuren, den zu extrahierenden Metalloxiden sowie den gegebenenfalls eingesetzten Mineralsäuren keine chemischen Reaktionen eingehen. Diese Lösungsmittel sollen mit Wasser nur geringfügig mischbar sein, damit nach durchgeführter Extraktion eine optimale Trennung der organischen Phase von der gegebenenfalls vorliegenden wäßrigen bzw. mineralsauren Phase möglich ist. Sie sollen ferner nicht-flüchtig und hochsiedend sein und möglichst hohe Flammpunkte, > 80 °C, vorzugsweise > 100 °C, aufweisen. Bevorzugt werden, wie aus dem Stand der Technik bekannt, als wenig wasserlösliche oder wenig mit Wasser mischbare organische Lösungsmittel Kerosine oder deren Mischungen verwendet.

Der hydrophobe Charakter des organischen Lösungsmittels bestimmt auch in weitem Umfang die Natur des in diesem Lösungsmittel enthaltenen Extraktanden. Als solcher fungiert eine Hyroxamsäure der allgemeinen Formel (I) oder eine Mischung mehrerer derartiger Hydroxamsäuren. Der Rest R in der oben genannten allgemeinen Formel kann für geradkettige Alkylreste aus der Gruppe Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Eicosyl oder Uneicosyl stehen. Es ist jedoch auch möglich, daß R in der oben genannten allgemeinen Formel (I) für die verzweigtkettigen Isomere der genannten geradkettigen Alkylreste steht. Entsprechend können anstelle der gesättigten Alkylreste auch ungesättigte Alkylreste stehen, die ebenfalls geradkettig oder verzweigt sein können. Ferner kommen als Reste R Cycloalkylreste mit 5 bis 7 C-Atomen in Frage, d.h. Cyclopentyl, Cyclohexyl oder Cycloheptyl. Derartige Cycloalkylreste können auch mit einer oder mehreren, geradkettigen oder verzweigten, gesättigten Alkylgruppen mit 1 bis 6 C-Atomen substituiert sein. Ferner kommen als substituierte Cycloalkylreste auch solche Reste in Frage, wie sie aus Naphthensäuren (hierbei mit einer Carboxylgruppe verknüpft) bekannt sind. Der Rest R kann darüber hinaus auch einen unsubstituierten oder substituierten Phenylrest bedeuten. Als Substituenten kommen hier eine oder mehrere, geradkettige oder verzweigte, gesättigte Alkylgruppen mit 1 bis 12 C-Atomen in Frage.

Bevorzugt werden als Extraktanden Hydroxamsäuren der allgemeinen Formel (I) verwendet, in der R für verzweigte, gesättigte Alkylreste mit 5 bis 21 C-Atomen, bevorzugt für verzweigte, gesättigte Alkylreste mit 7 bis 19 C-Atomen steht.

Aufgrund der oben angesprochenen Forderung, daß sich der bzw. die als Extraktand(en) eingesetzte(n) Hydroxamsäure(n) möglichst gut in dem organischen Lösungsmittel lösen muß und in diesem Lösungsmittel die erforderliche Stabilität aufweist, werden mit besonderem Vorteil eine oder mehrere Hydroxamsäuren der allgemeinen Formel (I) verwendet, in der R für sogenannte neo-Alkylreste der allgemeinen Formel (II) steht 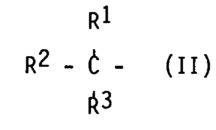 in der die Summe der Anzahl der C-Atome der Alkylreste R¹, R und R³ im Bereich von 6 bis 18 liegt. Als Rest R kommen mithin die zahlreichen verschiedenen isomeren Reste aus der Gruppe neo-Heptyl, neo-0ctyl, neo-Nonyl, neo-Decyl, neo-Undecyl, neo-Dodecyl, neo-Tridecyl, neo-Tetradecyl, neo-Pentadecyl, neo-Hexadecyl, neo-Heptadecyl, neo-0ctadecyl und neo-Nonadecyl in Frage. Die Einzelbedeutungen der Reste R¹, R und R³ ist in diesem Zusammenhang von untergeordneter Bedeutung, solange jeder der genannten Reste mindestens 1 C-Atom hat. Derartige neo-Alkylreste garantieren eine optimale Löslichkeit und Stabilität der als Extraktand verwendeten Hydroxamsäuren der allgemeinen Formel (I) in dem organischen Lösungsmittel.

Die in dem erfindungsgemäßen Verfahren verwendeten Hydroxamsäuren der allgemeinen Formel (I) können nach aus dem Stand der Technik bekannten Verfahren hergestellt werden. So kann beispielsweise nach der DE-PS 22 10 106 die entsprechende Carbonsäure durch Umsetzung mit einem Überschuß an SOCl₂ in das entsprechende Säurechlorid überführt und dann mit Hydroxylamin zur Hydroxamsäure der allgemeinen Formel (I) umgesetzt werden. Entsprechend ist auch (vgl. J. Chem. Research (S) 1982, 90) die Umsetzung des Carbonsäureesters und dessen nachfolgende Umsetzung mit Hydroxylamin zur entsprechenden Hydroxamsäure der allgemeinen Formel (I) möglich. Es können jedoch auch andere, aus dem Stand der Technik bekannte Verfahren zur Herstellung derartiger Verbindungen (I) angewendet werden.

Wie bereits gesagt, haben sich für die Durchführung des erfindungsgemäßen Verfahrens insbesondere solche Hydroxamsäuren der allgemeinen Formel (I) bewährt, in der R für neo-Alkylreste der allgemeinen Formel (II) steht. Solche Hydroxamsäuren (I) können nach den vorstehend beschriebenen Verfahren aus den von der Firma Shell Chemical Corporation unter dem Handelsnamen Versatic^{R}-Säuren erhältlichen Produkten hergestellt werden. Sie enthalten im einen Fall im Molekül der allgemeinen Formel (I) an der mit R bezeichneten Stelle einen neo-Alkylrest der allgemeinen Formel (II), in der die Summe der C-Atome der Reste R¹, R und R³ 8 ist, und im anderen Fall solche Verbindungen (I), in der der Rest R für neo-Alkylreste der allgemeinen Formel (II) steht, in der die Summe der C-Atome der Reste R¹, R und R³ im Bereich von 7 bis 17 liegt. Solche Produkte stellen ein technisches Gemisch von Hydroxamsäuren unterschiedlicher Kettenlänge dar. Sie ermöglichen den Einsatz als Extraktionsreagens, welches für die gewünschten Anwendungen optimale Eigenschaften besitzt, also nicht nur in der organischen Phase sehr gut löslich und stabil ist, sondern sich auch optimal mit den oben genannten Metallionen reversibel beladen läßt. Außerdem weisen derartige Hydroxamsäuren enthaltende organische Phasen eine Viskosität in einem solchen Bereich auf, daß nach dem nachfolgend besprochenen Durchmischungsvorgang eine optimale Phasentrennung gewährleistet ist.

Im Sinne der vorliegenden Erfindung werden die festen Metalloxide mit dem inerten organischen Lösungsmittel in Kontakt gebracht, welches mindestens eine der vorstehend definierten Hydroxamsäuren gelöst enthält. Die Konzentration der Hydroxamsäure im Lösungsmittel soll dabei so bemessen sein, daß sie zur Extraktion der Metallionen aus den festen Metalloxiden hinreicht. Im allgemeinen läßt sich die für den Einzelfall optimale Menge an Extraktionsmittel durch Versuche leicht ermitteln. Die Menge an Extraktand in der organischen Phase wird jedoch dadurch begrenzt, daß bei hohen Konzentrationen der Hydroxamsäuren in der organischen Phase die Viskosität während der Beladung mit den Metallionen so stark ansteigt, daß bei einer kontinuierlichen Verfahrensweise eine effiziente Vermischung der beiden Phasen nicht mehr gewährleistet werden kann. Außerdem wird die Trennung der organischen von der wäßrigen Phase mit steigender Viskosität wesentlich erschwert. Daher ist es erfindungsgemäß bevorzugt, in dem erfindungsgemäßen Verfahren organische Lösungsmittel wie Kerosine oder deren Mischungen zu verwenden, die eine oder mehrere Hydroxamsäuren der allgemeinen Formel (I) in einer Konzentration von 0,01 bis 2,0 mol/l Lösungsmittel, bevorzugt in einer Konzentration von 0,1 bis 1,0 mol/l Lösungsmittel, enthalten.

Die Temperatur, bei der die beiden Phasen miteinander in Kontakt gebracht werden, liegt üblicherweise in einem solchen Bereich, in dem sich das Extraktionsreagens nicht zersetzen kann, so daß Temperaturen oberhalb von 80 °C nicht verwendet werden sollten. Andererseits sollte bei hohen Konzentrationen an Hydroxamsäure in der organischen Phase und großen Mengen zu extrahierender Metalloxide die Temperatur so gewählt werden, daß die Viskosität der Phasen nicht zu groß ist. Als unterer Temperaturwert sollte in diesen Fällen nicht weniger als 5 °C gewählt werden.

Der zweite Schritt des erfindungsgemäßen Verfahrens besteht darin, die feste Metalloxide enthaltende Phase und die organische Phase über eine ausreichende Kontaktierungszeit hinweg intensiv miteinander zu vermischen. Die Kontaktierungszeit der beiden Phasen ist einer der Parameter, von dem die extrahierte Menge der Metallionen abhängig ist. Bei festgelegter Konzentration des Extraktionsmittels steigt im allgemeinen die Menge der extrahierten Metallionen mit steigender Kontaktierungszeit. Primär wird die für die Extraktion der Metallionen hinreichende Kontaktierungszeit natürlich durch die Menge der zu extrahierenden Metalloxide beeinflußt. Mit andere Worten heißt dies, daß bei größeren Mengen an Metalloxiden die Kontaktierungszeiten entsprechend lange gewählt werden müssen. Im allgemeinen läßt sich die für einen gegebenen Einzelfall optimale Kontaktierungszeit durch Vorversuche leicht bestimmen.

Bei einer Temperatur in dem vorstehend genannten Bereich werden nun die beiden Phasen intensiv miteinander gemischt. Als Mischgeräte kommen hierfür alle diejenigen Vorrichtungen in Frage, die auch für flüssig-flüssig-Extraktionen üblicherweise Verwendung finden können.

Somit können für das erfindungsgemäße Verfahren beispielsweise Rührkolonnen, Zentrifugen, übliche Rührgefäße oder auch ein sogenannter "Mixer-Settler" eingesetzt werden. Mixer-Settler finden insbesondere bei flüssig-flüssig-Extraktionen Verwendung und sind im diesbezüglichen Stand der Technik hinreichend beschrieben. Für das im erfindungsgemäßen Verfahren eingesetzte Mischgerät ist es lediglich von Bedeutung, daß es eine hinreichend gute Durchmischung der die festen Metalloxide enthaltenden Phase mit der organischen Phase gewährleistet.

Wie bereits vorstehend erörtert, werden die Metalloxide entweder als solche in fester Phase oder dipergiert in einer flüssigen Phase für das Extraktionsverfahren eingesetzt. Im Sinne der Erfindung ist es hierbei bevorzugt, daß man als flüssige Phase Wasser und/oder eine Mineralsäure, vorzugsweise Schwefelsäure, einsetzt. In welcher der vorstehend genannten Phasen die Metalloxide in dem erfindungsgemäßen Verfahren eingesetzt werden, d.h., ob als solche in fester Phase oder dispergiert in wäßriger oder mineralsaurer Phase, hängt vom jeweiligen Metalloxid ab und läßt sich im Einzelfall durch Versuche leicht ermitteln. Grundsätzlich ist es möglich, alle der zuvor genannten Metallionen aus einer pulverförmigen, feste Metalloxide enthaltenden Phase nach dem erfindungsgemäßen Verfahren in die organische Phase zu extrahieren. In vielen Fällen hat es sich jedoch als vorteilhaft erwiesen, die festen Metalloxide in Wasser oder einer Mineralsäure, d.h. einer flüssigen Phase, zu dispergieren. Das Verhältnis von organischer Phase zu flüssiger Phase, nachstehend auch O/A-Verhältnis genannt, ist im allgemeinen unkritisch und läßt sich gleichfalls durch Versuche auf einen optimalen Wert einstellen. Bei Verwendung von Wasser oder Schwefelsäure für die flüssige Phase, in der die festen Metalloxide dispergiert sind, hat es sich im Sinne der Erfindung als vorteilhaft erwiesen, ein O/A-Verhältnis von 1 : 1 zu wählen.

Gemäß einer bevorzugten Ausführungsform der vorliegenden Erfindung werden als Metalloxide die Oxide von Arsen, Antimon, Wismut, Blei, Germanium, Cadmium, Quecksilber, Kupfer, Molybdän, Vanadium, Mangan und/oder Indium, welche als solche in fester Phase vorliegen, für das Extraktionsverfahren eingesetzt.

Nach einer weiteren bevorzugten Ausführungsform der vorliegenden Erfindung werden als Metalloxide die vorstehend genannten Metalloxide, welche dispergiert in wäßriger Phase vorliegen, für das Extraktionsverfahren eingesetzt.

Nach einer dritten bevorzugten Ausführungsform der vorliegenden Erfindung werden als Metalloxide die Oxide von Arsen, Antimon und/ oder Wismut, welche dispergiert in mineralsaurer Phase vorliegen, für das Extraktionsverfahren eingesetzt.

Wie bereits vorstehend ausgeführt, kann man mit einem speziellen Metalloxid jeweils zu unterschiedlichen Extraktionsergebnissen gelangen, je nachdem in welcher Phase man es mit der organischen Phase vermischt. Dies gilt auch für die vorstehend angegebenen bevorzugten Ausführungsformen der Erfindung.

Beispielsweise zeigt Arsenoxid in Abhängigkeit von der Menge an zugesetztem Wasser oder Säure im Vergleich zu den Oxiden des Antimons oder Wismuts etwas abweichendes Verhalten. Arsentrioxid wird vorzugsweise in hohem Maß ohne Wasser- oder Säurezusatz - also in festem Zustand - extrahiert. Bei Antimon- und Wismutoxid begünstigt Wasser oder Zusatz einer schwachen Säure die Extraktion im allgemeinen. Dagegen wird Blei(II)oxid ebenso wie Blei(II,IV)oxid sowohl aus fester als auch aus rein wäßrig aufgeschlämmter Phase, also nicht angesäuerter Phase, extrahiert. Ebenso werden Germaniumoxid, Cadmiumoxid, Quecksilber(II)oxid, Kupfer(I)oxid, Molybdänoxid, Vanadinpentoxid, Manganoxid und Indiumoxid sowohl aus fester als auch aus rein wäßrig aufgeschlämmter Phase extrahiert.

Die Fähigkeit der Hydroxamsäuren, Metalloxide in fester oder suspendierter Form zu extrahieren, ist insbesondere vorteilhaft zur Abtrennung spezieller Metallionen aus Wertmetall-Elektrolytlösungen, besonders aus Kupfer-Raffinationselektrolytlösungen. Dementsprechend betrifft eine weitere bevorzugte Ausführungsform der vorliegenden Erfindung die Extraktion der Oxide von Arsen, Antimon und/oder Wismut, welche in schwefelsauren Kupfer-Raffinationselektrolytlösungen in dispergierter Form vorliegen. Eine vor der Anwendung einer Solvent-Extraktion bisher unbedingt erforderliche effiziente Filtration der Wertmetall-Elektrolytlösungen ist deshalb nicht mehr erforderlich. In vorteilhafter Weise kann das erfindungsgemäße Verfahren daher genutzt werden, um bei Anwesenheit von in suspendierter Form vorliegenden Metalloxiden, also Störelementen, die extrahierte Gesamtmenge an Metallionen sogar noch zu erhöhen. Hierdurch verringert sich letztlich auch die Menge an Anodenschlamm, der während der Elektrolyse konstant anfällt und wegen der darin enthaltenen Edelmetalle üblicherweise getrennt aufgearbeitet wird.

Die Eigenschaft der Hydroxamsäuren, Metallionen auch aus Metalloxiden, die in fester oder suspendierter Form vorliegen, zu extrahieren, kann ebenfalls in vorteilhafter Weise zur Extraktion solcher Metalloxide verwendet werden, die sich aus den vorher genannten unterschiedlichsten Prozeßnebenströmen ableiten, beispielsweise aus SO₂-Röstgasen, Flugstäuben, Schlacken, Schlämmen oder Waschwässern. Ein "in Lösung bringen" vor einer üblichen Solvent-Extraktion unter Einsatz großer Volumina an Aufschlußmitteln (meist Mineralsäuren) ist nicht erforderlich. Es genügt vielmehr gegebenenfalls ein Zusatz geringer Mengen von Wasser oder schwacher Mineralsäuren, die lediglich die Funktion haben, solche meist in oxidischer Form vorliegende Metalle aufzuschlämmen. Es kann so ein direkter Kontakt des in einem inerten organischen Lösungsmittel (vorzugsweise Kerosin) enthaltenen Extraktionsreagenzes (Hydroxamsäure) mit den zu extrahierenden Metalloxiden aus dem jeweiligen Prozeßnebenstrom erfolgen.

Man trennt in einem nachfolgenden dritten Verfahrensschritt die organische Phase, die die extrahierten Metallionen enthält, von der anderen Phase ab, und reextrahiert in an sich bekannter Weise die Metallionen aus der Organphase.

Diese Reextraktion der Metallionen aus der Organphase erfolgt in an sich bekannter Weise nach Aufarbeitungsverfahren des Standes der Technik. Im Sinne der vorliegenden Erfindung ist es besonders bevorzugt, daß man zur Reextraktion und Aufarbeitung der extrahierten Metallionen die organische Phase mit einen Sulfidfällungsmittel versetzt und anschließend die ausgefällten Metallsulfide abtrennt, wobei man vorzugsweise der organischen Phase vor der Sulfidfällung Wasser zusetzt. Diese Art der Reextraktion bzw. Aufarbeitung ist in den bereits vorstehend zitierten deutschen Patentanmeldungen P 37 25 611.4 und P 38 36 731.9 detailliert beschrieben. Die Reextraktion der Metallionen aus der Organphase bzw. deren Aufarbeitung kann jedoch auch nach anderen, an sich bekannten Verfahren erfolgen. Hierzu zählen beispielsweise das sogenannte "Stripping" durch eine pH-Absenkung mittels Mineralsäuren, beispielsweise Schwefelsäure, oder mit Hilfe wasserlöslicher Komplexbildner, wie anorganischen Säure, beispielsweise Salzsäure oder Phosphorsäure, oder auch organischen Säuren, wie Oxalsäure oder Phosphonsäuren. Hierzu wird auf den relevanten Stand der Technik verwiesen.

Die folgenden Beispiele dienen zur Veranschaulichung der Erfindung ohne diese jedoch zu begrenzen.

Für alle Extraktionsversuche wurde als Extraktionsreagenz eine Hydroxamsäure eingesetzt, hergestellt aus einem handelsüblichen Gemisch von Carbonsäuren der Formel 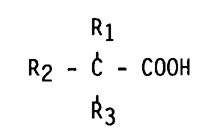 in der die Summe der Zahl der C-Atome der Alkylreste R₁, R₂ und R₃ im Bereich zwischen 7 und 17 lag (Versatic^{R} 1019 der Firma Shell). Die Konzentration an Extraktant in der organischen Phase lag bei 0,5 mol/l Lösungsmittel, teilweise bei 1,0 molar. Als organisches Lösungsmittel wurde das Kerosin Escaid^{R} 100 der Firma Esso verwendet.

### Beispiel 1

Dieses Beispiel dient zur Veranschaulichung der Extraktion der Metalloxide von As, Sb und Bi, suspendiert in mineralsaurer Phase.

Eingesetzt wurde hierzu eine Lösung aus einem Kupfer-Raffinationselektrolysebetrieb mit der folgenden Zusammensetzung in g/l:

| | |
|---|---|
| 12,0 | As, |
| 0,03 | Bi, |
| 0,52 | Sb, |
| 0,3 | Fe, |
| 45 | Cu, |
| 10 | Ni und |
| 160 | H₂SO₄. |

Beispiel A (Vergleich) zeigt die Ergebnisse, welche mittels Solvent Extraktion der filtrierten Elektrolytlösung, die mithin keine festen Metalloxide enthielt, erhalten wurden.
Beispiel B gibt die Ergebnisse wieder, bei denen dieselbe Elektrolytlösung mit den suspendierten Metalloxiden (aufgerührt) für die Extraktion eingesetzt wurde.

Eine Analyse des suspendierten Feststoffanteils, d.h. der Metalloxide, ergab die folgende Zusammensetzung (in Gew.-%):
- Feststoff (isoliert und getrocknet):: < 0,1 Fe
< 0,1 Ni
0,5 Cu
1,2 Bi
19,5 As
48,0 Sb

Die Analyse belegt, daß die Komponenten As, Sb und Bi die Hauptbestandteile im Feststoffanteil sind.

Versuchsbedingungen waren:
- O/A-Verhältnis 1 :: 1 (Verhältnis der organischen zur wäßrigen Phase)
- Schüttelzeit: 15 min bei einer Temperatur von 60 °C, sowie
1 h bei Raumtemperatur (d.h. ca. 20 °C),
- Reagenzkonzentration: 0,5 molar bzw. 1,0 molar, d.h. Mol Hydroxamsäure (Extraktant) pro Liter Lösungsmittel (siehe Tab. 1).
Die Organphase wurde vor der Analyse der Metallgehalte filtriert.

**Tabelle 1**

| Elektrolyt lösung | Schüttelzeit (min) | Temp. (°C) | Konz. Extraktant (molar) | Organphase, extrahierte Menge (g/l) | | |
|---|---|---|---|---|---|---|
| | | | | Sb | Bi | As |
| A | 60 | RT | 0,5 | 0,3 | 0,015 | 6,8 |
| B | 60 | RT | 0,5 | 4,3 | 0,015 | 6,3 |
| A | 15 | 60 | 0,5 | 0,3 | 0,013 | 6,4 |
| B | 15 | 60 | 0,5 | 5,2 | 0,023 | 5,4 |
| A | 15 | 60 | 1,0 | 0,3 | 0,018 | 9,8 |
| B | 15 | 60 | 1,0 | 6,1 | 0,091 | 10,5 |

Die Ergebnisse belegen, daß vor allem Sb und Bi verstärkt in die Organphase extrahiert werden, wenn eine Elektrolytlösung mit suspendierten Feststoffteilchen verwendet wird. Dies steht in engem Zusammenhang mit den ermittelten Hauptbestandteilen im Feststoff (siehe Analyse). Der Effekt wird bei erhöhter Temperatur noch verstärkt. Die As-Extraktion bleibt in diesem Fall nahezu konstant und erfolgt größtenteils aus gelöster Phase (siehe auch Beispiel 2). Hierbei ist zu berücksichtigen, daß aufgrund der höheren Temperatur sowie dem insgesamt höheren Angebot an Antimon eine andere Austauschkinetik wirksam wird, wobei - im Hinblick auf die Beladungskapazität der Organphase insgesamt - Arsen durch Antimon teilweise verdrängt wird. Bei Bedarf kann durch Erhöhung der Konzentration an Extraktionsmittel oder des O/A-Verhältnisses die extrahierte Gesamtmenge an Störmetallen gesteigert werden. Dies ist abhängig von der Zusammensetzung des jeweiligen Raffinationselektrolyten.

### Beispiel 2

Die folgenden Tabellen zeigen die Extraktionsergebnisse an reinen Metalloxiden und zwar As₂O₃, Sb₂O₃ und Bi₂O₃ bei unterschiedlichen Bedingungen und Variation der Parameter Temperatur, Kontaktzeit, mit Zusatz von Wasser oder Schwefelsäure unterschiedlicher Konzentration aus supendierter, aufgeschlämmter Phase, sowie ohne jeglichen Zusatz einer flüssigen Phase (A-Phase). Falls kein Zusatz von Wasser oder Säure verwendet wurde, erfolgte der Extraktionstest durch Aufschlämmen des Metalloxids direkt in der organischen Phase unter kräftigem Rühren oder Schütteln. Bei Zusatz von Wasser oder Schwefelsäure bestimmter Konzentration erfolgte ebenfalls Aufschlämmung des Metalloxids in der wäßrigen bzw. mineralsauren Phase und Zugabe der organischen Phase im Verhältnis O/A 1 : 1. Die Reagenzkonzentration des Extraktanten im Lösungsmittel war 0,5 molar. Die Menge an eingesetztem Metalloxid H₂O₃ wurde so gewählt, daß die Konzentration an Metall 10 g/l organischer Phase, d.h. Lösungsmittel plus Extraktant, betrug. Die Organphase wurde vor der Analyse der Metallgehalte filtriert.

Die nachfolgenden Tabellen zeigen die erhaltenen Extraktionsergebnisse für die Metalloxide As₂O₃ (Tabelle 2), Sb₂O₃ (Tabelle 3) und Bi₂O₃ (Tabelle 4). Die Prozentangabe in der jeweils letzten Spalte betrifft jeweils die prozentuale Menge des extrahierten Metallions bezogen auf die eingesetzte Menge.

**Tabelle 2**

| Extraktionstests an As₂O₃ | | | | | | |
|---|---|---|---|---|---|---|
| O-Phase mol/l | A-Phase | O/A-Verh. | Temp. (°C) | Dauer (min) | g/l extr. As | % extr. As |
| 0,5 | - | - | RT | 60 | 0,2 | 2 |
| 0,5 | - | - | 60 | 5 | 1,6 | 16 |
| 0,5 | - | - | 60 | 15 | 4,5 | 45 |
| 0,5 | - | - | 60 | 30 | 6,4 | 64 |
| 0,5 | - | - | 60 | 60 | 9,1 | 91 |
| 0,5 | H₂O | 1:1 | RT | 60 | 0,2 | 2 |
| 0,5 | H₂O | 1:1 | 60 | 60 | 4,7 | 47 |
| 0,5 | H₂SO₄ (1 g/l) | 1:1 | 60 | 5 | 0,3 | 3 |
| 0,5 | H₂SO₄ (1 g/l) | 1:1 | 60 | 10 | 0,5 | 5 |
| 0,5 | H₂SO₄ (1 g/l) | 1:1 | 60 | 15 | 0,8 | 8 |
| 0,5 | H₂SO₄ (1 g/l) | 1:1 | 60 | 30 | 1,7 | 17 |
| 0,5 | H₂SO₄ (1 g/l) | 1:1 | 60 | 60 | 2,1 | 21 |
| 0,5 | H₂SO₄ (10 g/l) | 1:1 | 60 | 60 | 3,1 | 31 |
| 0,5 | H₂SO₄ (150 g/l) | 1:1 | RT | 60 | 0,2 | 2 |
| 0,5 | H₂SO₄ (150 g/l) | 1:1 | 60 | 60 | 0,4 | 4 |
| - | H₂SO₄ (150 g/l) | - | RT | 60 | 0,8 | 8 |
| | (Blindwert) | | | (in wäßr. Phase) | | |

**Tabelle 3**

| Extraktionstests an Sb₂O₃ | | | | | | |
|---|---|---|---|---|---|---|
| O-Phase mol/l | A-Phase | O/A Verh. | Temp. (°C) | Dauer (min) | g/l extr. Sb | % extr. Sb |
| 0,5 | - | - | 60 | 60 | 0,1 | 1 |
| 0,5 | H₂O | 1:1 | RT | 60 | 0,4 | 4 |
| 0,5 | H₂O | 1:1 | 60 | 60 | 3,8 | 38 |
| 0,5 | H₂SO₄ (1 g/l) | 1:1 | 60 | 5 | 1,2 | 12 |
| 0,5 | H₂SO₄ (1 g/l) | 1:1 | 60 | 10 | 2,1 | 21 |
| 0,5 | H₂SO₄ (1 g/l) | 1:1 | 60 | 15 | 3,3 | 33 |
| 0,5 | H₂SO₄ (1 g/l) | 1:1 | 60 | 30 | 5,1 | 51 |
| 0,5 | H₂SO₄ (1 g/l) | 1:1 | 60 | 60 | 8,1 | 81 |
| 0,5 | H₂SO₄ (10 g/l) | 1:1 | RT | 60 | 7,4 | 74 |
| 0,5 | H₂SO₄ (50 g/l) | 1:1 | RT | 60 | 9,5 | 95 |
| 0,5 | H₂SO₄ (100 g/l) | 1:1 | RT | 60 | 8,9 | 89 |
| 0,5 | H₂SO₄ (150 g/l) | 1:1 | RT | 60 | 9,2 | 92 |
| 0,5 | H₂SO₄ (150 g/l) | 1:1 | 60 | 60 | 9,8 | 98 |
| - | H₂SO₄ (150 g/l) | 1:1 | RT | 60 | 0,7 | 7 |
| | (Blindwert) | | | (in wäßr. Phase) | | |

**Tabelle 4**

| Extraktionstests an Bi₂O₃ | | | | | | |
|---|---|---|---|---|---|---|
| O-Phase mol/l | A-Phase | O/A-Verh. | Temp. (°C) | Dauer (min) | g/l extr. Bi | % extr. Bi |
| 0,5 | - | - | 60 | 60 | 0,05 | 0,5 |
| 0,5 | H₂O | 1:1 | RT | 60 | 0,3 | 3 |
| 0,5 | H₂O | 1:1 | 60 | 60 | 5,1 | 51 |
| 0,5 | H₂SO₄ (1 g/l) | 1:1 | 60 | 5 | 6,0 | 60 |
| 0,5 | H₂SO₄ (1 g/l) | 1:1 | 60 | 10 | 8,8 | 88 |
| 0,5 | H₂SO₄ (1 g/l) | 1:1 | 60 | 15 | 9,5 | 95 |
| 0,5 | H₂SO₄ (1 g/l) | 1:1 | 60 | 30 | 9,4 | 94 |
| 0,5 | H₂SO₄ (1 g/l) | 1:1 | 60 | 60 | 9,0 | 90 |
| 0,5 | H₂SO₄ (10 g/l) | 1:1 | RT | 60 | 8,7 | 87 |
| 0,5 | H₂SO₄ (50 g/l) | 1:1 | RT | 60 | 9,5 | 95 |
| 0,5 | H₂SO₄ (100 g/l) | 1:1 | RT | 60 | 9,0 | 90 |
| 0,5 | H₂SO₄ (150 g/l) | 1:1 | RT | 60 | 6,2 | 62 |
| 0,5 | H₂SO₄ (150 g/l) | 1:1 | 60 | 60 | 9,8 | 98 |
| - | H₂SO₄ (150 g/l) | - | RT | 60 | 2,7 | 27 |
| | (Blindwert) | | | (in wäßr. Phase) | | |

### Beispiel 4

Dieses Beispiel betrifft die Extraktion von festem und/oder in Wasser suspendiertem Bleioxid und zwar in Form von Blei(II)oxid (PbO) und dem gemischten Blei(II/IV)oxid Pb₃O₄ (Mennige).

### Versuchsbedingungen:

0,5 molare Lösung von Hydroxamsäure in Escaid^{R} 100,
bei Zusatz von Wasser betrug das Verhältnis von organischer zu wäßriger Phase (O/A-Verhältnis) 1:1;
1 h Schüttelzeit bei 60 °C;
Metallkonzentration der Oxide jeweils 10 g/l organischer Phase.

### Ergebnisse:

Sowohl bei PbO als auch bei Pb₃O₄ erfolgte vollständige Extraktion des Bleis in die Organphase.

### Beispiel 5

Die Anwendbarkeit des erfindungsgemäßen Verfahrens auch für andere Metalloxide zeigen die folgenden Extraktionstests, wobei die Metalloxide zum Teil in fester Form, zum Teil aufgeschlämmt in Wasser (Zusatz im Verhältnis 1 : 1) bei unterschiedlicher Rührzeit und Temperatur eingesetzt wurden. Die Menge an eingesetztem Metalloxid wurde so gewählt, daß die Konzentration an Metall 10 g/l Organphase betrug. Die Organphase war eine 0,5 molare Lösung von Hydroxamsäure im Lösungsmittel Escaid^{R} 100. Die Metalloxide wurden in fester oder in Wasser aufgeschlämmter Form vorgelegt und die Organphase hinzugegeben und kräftig gerührt. Vor Analyse der Organphase wurde diese filtriert. Die nachstehende Tabelle 5 zeigt die erhaltenen Ergebnisse.

**Tabelle 5**

| Metalloxid | Zusatz i.Verh. 1 : 1 | Rührdauer in min | Temp. °C | g/l extr. Metall in der org. Phase | % extr. Metall |
|---|---|---|---|---|---|
| GeO₂ | - | 60 | 60 | 4,3 | 43 |
| GeO₂ | Wasser | 60 | 60 | 8,8 | 88 |
| CdO | - | 60 | RT | 6,1 | 61 |
| CdO | Wasser | 60 | RT | 7,2 | 72 |
| HgO | - | 60 | RT | 0,6 | 6 |
| HgO | Wasser | 60 | RT | 2,3 | 23 |
| Cu₂O | - | 60 | RT | 6,5 | 65 |
| MoO₂ | - | 60 | RT | 5,6 | 56 |
| PbO | Wasser | 60 | 60 | 10 | 100 |
| Pb₃O₄ | - | 60 | 60 | 8,4 | 84 |
| Pb₃O₄ | Wasser | 60 | RT | 10 | 100 |
| PbO | Wasser | 60 | RT | 9,2 | 92 |
| V₂O₅ | Wasser | 60 | RT | 10 | 100 |
| MnO₂ | Wasser | 60 | RT | 0,9 | 9 |
| In₂O₃ | Wasser | 60 | 60 | 4,2 | 42 |

## Patentansprüche

1. Verfahren zur Zweiphasen-Extraktion von Metallionen unter Verwendung von Hydroxamsäuren der allgemeinen Formel (I) 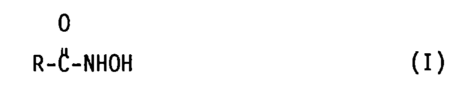 in welcher R einen geradkettigen oder verzweigten, gesättigten oder ungesättigten Alkylrest mit 5 bis 21 C-Atomen, einen unsubstituierten oder mit C₁₋₆-Alkylgruppen substituierten Cycloalkylrest mit 5 bis 7 C-Atomen, oder einen unsubstituierten oder mit C₁₋₁₂-Alkylgruppen substituierten Phenylrest bedeutet, dadurch gekennzeichnet, daß man
- feste, feinzerteilte Metalloxide von Metallen der III. bis V. Hauptgruppe sowie der I., II. und IV. bis VIII. Nebengruppe des periodischen Systems, die entweder als solche in fester Phase oder dispergiert, in nicht gelöster Form in einer flüssigen Phase vorliegen,
- mit einem inerten organischen Lösungsmittel, welches mit Wasser nur geringfügig mischbar ist und mindestens eine Hydroxamsäure der allgemeinen Formel (I) in einer für die Extraktion der Metallionen hinreichenden Menge gelöst enthält, in Kontakt bringt,
- die die festen Metalloxide enthaltende Phase mit der die Hydroxamsäure(n) enthaltenden organischen Phase über eine für die Extraktion der Metallionen hinreichende Kontaktierungszeit intensiv miteinander vermischt,
- anschließend die organische Phase abtrennt und die in dieser enthaltenen Metallionen in an sich bekannter Weise reextrahiert und aufarbeitet.

2. Verfahren nach Anspruch 1, dadurch gekennzeichnet, daß man als inertes organisches Lösungsmittel Kerosine oder deren Gemische verwendet.

3. Verfahren nach Anspruch 1 oder 2, dadurch gekennzeichnet, daß man inerte organische Lösungsmittel verwendet, die mindestens eine Hydroxamsäure der allgemeinen Formel (I) in einer Konzentration von 0,01 bis 2,0 mol/l Lösungsmittel, vorzugsweise 0,1 bis 1,0 mol/l Lösungsmittel, gelöst enthalten.

4. Verfahren nach einem der Ansprüche 1 bis 3, dadurch gekennzeichnet, daß man mindestens eine Hydroxamsäure der allgemeinen Formel (I) verwendet, in der R einen gesättigten, verzweigten Alkylrest mit 5 bis 21 C-Atomen, vorzugsweise mit 7 bis 19 C-Atomen, bedeutet.

5. Verfahren nach Anspruch 4, dadurch gekennzeichnet, daß man mindestens eine Hydroxamsäure der allgemeinen Formel (I) verwendet, in der R einen gesättigten, verzweigten Alkylrest der allgemeinen Formel (II) 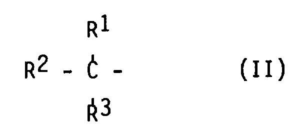 bedeutet, wobei die Summe der Anzahl der C-Atome der Alkylreste R¹, R und R³ im Bereich von 6 bis 18 liegt.

6. Verfahren nach einem der Ansprüche 1 bis 5, dadurch gekennzeichnet, daß man die Metalloxide entweder als solche in fester Phase oder dispergiert in wäßriger oder mineralsaurer Phase einsetzt.

7. Verfahren nach Anspruch 6, dadurch gekennzeichnet, daß man als Metalloxide die Oxide von Arsen, Antimon, Wismut, Blei, Germanium, Cadmium, Quecksilber, Kupfer, Molybdän, Vanadium, Mangan und/oder Indium, welche als solche in fester Phase vorliegen, einsetzt.

8. Verfahren nach Anspruch 6, dadurch gekennzeichnet, daß man als Metalloxide die Oxide von Arsen, Antimon, Wismut, Blei, Germanium, Cadmium, Quecksilber, Kupfer, Molybdän, Vanadium, Mangan und/oder Indium, welche dispergiert in wäßriger Phase vorliegen, einsetzt.

9. Verfahren nach Anspruch 6, dadurch gekennzeichnet, daß man als Metalloxide die Oxide von Arsen, Antimon und/oder Wismut, welche dispergiert in mineralsaurer Phase vorliegen, einsetzt.

10. Verfahren nach Anspruch 9, dadurch gekennzeichnet, daß man die Oxide von Arsen, Antimon und/oder Wismut, welche in schwefelsauren Kupfer-Raffinationselektrolytlösungen in dispergierter Form vorliegen, einsetzt.

11. Verfahren nach einem der Ansprüche 7 bis 10, dadurch gekennzeichnet, daß man zur Reextraktion und Aufarbeitung der extrahierten Metallionen die organische Phase mit einem Sulfidfällungsmittel versetzt und anschließend die ausgefällten Metallsulfide abtrennt, wobei man vorzugsweise der organischen Phase vor der Sulfidfällung Wasser zusetzt.

## Claims

1. A process for the two-phase extraction of metal ions using hydroxamic acids corresponding to general formula (I): 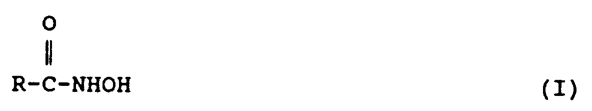 in which R is a linear or branched, saturated or unsaturated alkyl radical containing 5 to 21 carbon atoms, an unsubstituted or C₁₋₆-alkyl-substituted cycloalkyl radical containing 5 to 7 carbon atoms or an unsubstituted or C₁₋₁₂-alkyl-substituted phenyl radical,
characterized in that
- solid, finely divided metal oxides or metals of the IIIrd to Vth main group and the Ist, IInd and IVth to VIIIth secondary groups of the periodic system which are present either as such in solid form or in dispersed undissolved form in a liquid phase,
- are contacted with an inert organic solvent which is only sparingly miscible with water and in which at least one hydroxamic acid corresponding to the general formula (I) is dissolved in a quantity sufficient to extract the metal ions,
- the phase containing the solid metal oxides is intensively mixed with the organic phase containing the hydroxamic acid(s) over a period of time sufficient to extract the metal ions,
- the organic phase is subsequently removed and the metal ions present therein are re-extracted and worked up in known manner.

2. A process as claimed in claim 1, characterized in that kerosines or mixtures of thereof are used as the inert organic solvent.

3. A process as claimed in claim 1 or 2, characterized in that inert organic solvents in which at least one hydroxamic acid corresponding to general formula (I) is dissolved in a concentration of 0.01 to 2.0 moles/l solvent and preferably in a concentration of 0.1 to 1.0 mole/l solvent are used.

4. A process as claimed in any of claims 1 to 3, characterized in that at least one hydroxamic acid corresponding to general formula (I), in which R is a saturated branched alkyl radical containing 5 to 21 carbon atoms and 7 to 19 carbon atoms is used.

5. A process as claimed in claim 4, characterized in that at least one hydroxamic acid corresponding to general formula (I), in which R is a saturated branched alkyl radical corresponding to general formula (II) : 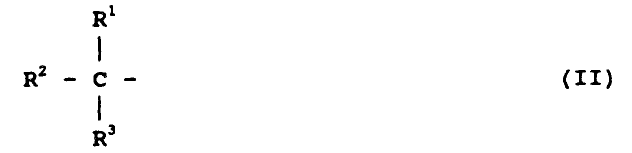 the sum total of carbon atoms in the alkyl radicals R¹, R and R³ being from 6 to 18, is used.

6. A process as claimed in any of claims 1 to 5, characterized in that the metal oxides are used either as such in solid form or in the form of a dispersion in water or a mineral acid.

7. A process as claimed in claim 6, characterized in that the oxides of arsenic, antimony, bismuth, lead, germanium, cadmium, mercury, copper, molybdenum, vanadium, manganese and/or indium, which are present as such in solid form, are used as the metal oxides.

8. A process as claimed in claim 6, characterized in that the oxides of arsenic, antimony, bismuth, lead, germanium, cadmium, mercury, copper, molybdenum, vanadium, manganese and/or indium, which are present in the form of a dispersion in water, are used as the metal oxides.

9. A process as claimed in claim 6, characterized in that the oxides of arsenic, antimony and/or bismuth present in the form of a dispersion in a mineral acid are used as the metal oxides.

10. A process as claimed in claim 9, characterized in that the oxides of arsenic, antimony and/or bismuth, which are present in the form of a dispersion in sulfuric acid copper refining electrolyte solutions are used.

11. A process as claimed in any of claims 7 to 10, characterized in that, to re-extract and work up the extracted metal ions, a sulfide precipitant is added to the organic phase and the metal sulfides precipitated are subsequently removed, water preferably being added to the organic phase before the sulfide precipitation step.

## Revendications

1. Procédé pour l'extraction en deux phases d'ions métalliques, à l'aide d'acides hydroxamiques de la formule générale (I) 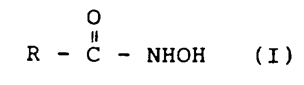 dans laquelle R représente un radical alkyle saturé ou insaturé, à chaîne droite ou ramifiée, comportant 5 à 21 atomes de C, un radical cycloalkyle non substitué ou substitué par des groupes alkyle en C₁₋₆, possédant 5 à 7 atomes de C, ou un radical phényle non substitué ou substitué par des groupes alkyle en C₁₋₁₂, caractérisé en ce que l'on
- met en contact des oxydes métalliques solides, à dispersion fine de métaux des groupes principaux III à V, ainsi que des qroupes secondaires I, Il et IV à VIII du système périodique, qui sont présents soit en tant que tels en phase solide soit en dispersion, sous forme non dissoute, dans une phase liquide
- avec un solvant organique inerte, qui n'est miscible avec l'eau que dans une mesure insignifiante et qui renferme au moins un acide hydroxamique de la formule générale (I) dissous dans une quantité suffisante pour l'extraction des ions métalliques,
- mélange intensivement entre elles la phase renfermant les oxydes métalliques solides et la phase organique contenant le ou les acides hydroxamiques pendant un temps de contact suffisant pour l'extraction des ions métalliques,
- sépare ensuite la phase organique, et réextrait et retraite les ions métalliques contenus dans celle-ci d'une manière connue en soi.

2. Procédé selon la revendication 1, caractérisé en ce que l'on utilise comme solvant organique inerte, des kérosènes ou des mélanges de ceux-ci.

3. Procédé selon la revendication 1 ou 2, caractérisé en ce que l'on utilise des solvants organiques inertes, qui renferment au moins un acide hydroxamique de la formule générale (I) dissous à une concentration de 0,01 à 2,0 moles par litre de solvant, de préférence à une concentration de 0,1 à 1,0 mole par litre de solvant.

4. Procédé selon la revendication 1 à 3, caractérisé en ce que l'on utilise au moins un acide hydroxamique de la formule générale (I), dans laquelle R représente un radical alkyle saturé, à chaîne ramifiée, comportant 5 à 21 atomes de C, de préférence 7 à 19 atomes de C.

5. Procédé selon la revendication 4, caractérisé en ce que l'on utilise au moins un acide hydroxamique de la formule générale (I), dans laquelle R représente un radical alkyle saturé, à chaîne ramifiée de la formule (II) 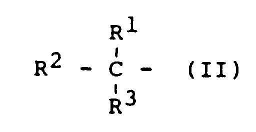 dans laquelle le nombre des atomes de C des radicaux alkyle R¹, R et R³ se situe dans l'intervalle de 6 à 18.

6. Procédé selon une des revendications 1 à 5, caractérisé en ce que l'on met en oeuvre les oxydes métalliques soit en tant que tels en phase solide soit en dispersion, dans une phase aqueuse ou d'acide minéral.

7. Procédé selon la revendication 6, caractérisé en ce que l'on met en oeuvre comme oxydes métalliques, les oxydes d'arsenic, d'antimoine, de bismuth, plomb, germanium, cadmium, mercure, cuivre, molybdène, vanadium, manganèse et/ou indium, qui sont présents en tant que tels en phase solide.

8. Procédé selon la revendication 6, caractérisé en ce que l'on met en oeuvre comme oxydes métalliques, les oxydes d'arsenic, d'antimoine, de bismuth, plomb, germanium, cadmium, mercure, cuivre, molybdène, vanadium, manganèse et/ou indium, qui sont présents à l'état dispersé en phase aqueuse.

9. Procédé selon la revendication 6, caractérisé en ce que l'on met en oeuvre comme oxydes métalliques, les oxydes d'arsenic, d'antimoine et/ou de bismuth, qui sont présents à l'état dispersé en phase d'acide minéral.

10. Procédé selon la revendication 9, caractérisé en ce que l'on met en oeuvre les oxydes d'arsenic, d'antimoine et/ou de bismuth, qui sont présents sous forme dispersée dans des électrolytes de raffinage du cuivre à base d'acide sulfurique.

11. Procédé selon une des revendications 7 à 10, caractérisé en ce qu'en vue de réextraire et de retraiter les ions métalliques extraits, on mélange la phase organique avec un agent de précipitation des sulfures et que l'on sépare ensuite les sulfures métalliques précipités, en ajoutant de préférence de l'eau à la phase organique avant la précipitation des sulfures.
